(19) **Europäisches Patentamt**
**European Patent Office**
**Office européen des brevets**

(11) **EP 2 027 076 B1**

(12) **FASCICULE DE BREVET EUROPEEN**

(45) Date de publication et mention
de la délivrance du brevet:
**28.03.2012 Bulletin 2012/13**

(51) Int Cl.:
***C03C 17/36*** (2006.01)

(21) Numéro de dépôt: **07729735.6**

(86) Numéro de dépôt international:
**PCT/EP2007/055333**

(22) Date de dépôt: **31.05.2007**

(87) Numéro de publication internationale:
**WO 2007/138097 (06.12.2007 Gazette 2007/49)**

(54) **VITRAGE A FAIBLE EMISSIVITE**

LOW-E-VERGLASUNG

LOW-E GLAZING

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **31.05.2006 EP 06114761**

(43) Date de publication de la demande:
**25.02.2009 Bulletin 2009/09**

(73) Titulaire: **AGC Glass Europe
1170 Bruxelles (Watermael-Boitsfort) (BE)**

(72) Inventeurs:
• **DECROUPET, Daniel**
  **6040 Jumet (BE)**
• **DEPAUW, Jean-Michel**
  **6040 Jumet (BE)**
• **NOVIS, Yvan**
  **6040 Jumet (BE)**

(74) Mandataire: **Le Vaguerèse, Sylvain Jacques et al
AGC Glass Europe
Propriété Intellectuelle
Rue de l'Aurore 2
6040 Jumet (BE)**

(56) Documents cités:
| | |
|---|---|
| EP-A1- 0 852 266 | EP-A1- 1 375 445 |
| WO-A1-2006/048463 | WO-A1-2006/122900 |
| WO-A1-2007/054655 | WO-A1-2007/054656 |
| WO-A2-03/055816 | US-A- 4 194 022 |
| US-A1- 2002 021 495 | US-A1- 2006 099 428 |

• BIRKHOLZ M ET AL: "X-ray diffraction study on residual stress and preferred orientation in thin titanium films subjected to a high ion flux during deposition", JOURNAL OF APPLIED PHYSICS, AMERICAN INSTITUTE OF PHYSICS. NEW YORK, US, vol. 96, no. 12, 1 January 2004 (2004-01-01), pages 7202-7211, XP012068440, ISSN: 0021-8979, DOI: 10.1063/1.1814413
• KIM S-H ET AL: "Influence of sputtering parameters on microstructure and morphology of TiO2 thin films", MATERIALS LETTERS, NORTH HOLLAND PUBLISHING COMPANY. AMSTERDAM, NL, vol. 57, no. 2, 1 December 2002 (2002-12-01), pages 343-348, XP004391318, ISSN: 0167-577X, DOI: 10.1016/S0167-577X(02)00788-7

**Description**

La présente invention concerne des vitrages à basse émissivité, c'est à dire des vitrages qui présentent la propriété de réfléchir les rayonnements infrarouges émis par exemple par l'intérieur des habitations, et limitant par conséquent les déperditions de chaleur.

La demande de tels vitrages est souvent liée à celle de disposer d'une transmission lumineuse aussi élevée que possible. Les deux exigences de faible émissivité et de forte transmission conduisent normalement à des solutions opposées en terme de structure. Il est nécessaire de procéder à des compromis difficiles à établir.

A ces exigences s'ajoutent celles de disposer de vitrages aussi neutres en couleur que possible et notamment en réflexion. Enfin la production doit rester aussi économique que possible.

Pour atteindre ces résultats la pratique la plus usuelle est de disposer de systèmes de couches minces comportant une ou plusieurs couches capables de réfléchir les rayonnements infrarouges. Des systèmes de ce type comprennent en général une ou plusieurs couches métalliques, notamment des couches d'argent de quelques nanomètres d'épaisseur. Les couches doivent être suffisamment minces pour ne pas réduire de manière trop importante la transmission lumineuse visible. L'épaisseur doit être aussi suffisante pour faire obstacle à la transmission des rayons infrarouges, l'épaisseur déterminant directement la fraction de ceux-ci qui sont effectivement réfléchis.

Les systèmes appliqués sur les vitrages doivent Simultanément remplir d'autres conditions. En premier, il est nécessaire de faire en sorte que les systèmes résistent aux agressions chimiques ou mécaniques auxquelles ils peuvent être exposés. Les couches métalliques sont habituellement déposées sur le substrat verrier par des techniques de dépôt sous vide du type pulvérisation cathodique assistée par champ magnétique, plus communément appelée « magnetron sputtering ». Les couches obtenues par ces techniques offrent l'avantage d'une grande régularité de composition, d'épaisseur et d'état de surface. Elles sont cependant très fragiles et doivent être protégées par des couches additionnelles. On utilise de façon parfaitement traditionnelle des couches diélectriques transparentes, d'oxydes et/ou de nitrures et/ou oxynitrures métalliques ou encore de mélanges de ceux-ci, offrant la résistance requise.

Simultanément les couches métalliques doivent aussi être protégées d'une diffusion possible à partir du substrat, diffusion qui modifierait de façon désavantageuse les propriétés de la couche métallique réfléchissante. La nature des couches diélectriques situées entre le substrat et la couche métallique est souvent analogue à celle des couches situées au-dessus de cette même couche métallique. Il s'agit d'oxydes et/ou de nitrures et/ou oxynitrures métalliques.

Traditionnellement, la séquence des couches se compose de la façon suivante :

## verre / diélectrique I / métal / diélectrique II

chacun des diélectriques I et II comportant le plus souvent plusieurs couches de nature différente.

Des diélectriques parmi les plus utilisés sont notamment $ZnO$, $TiO_2$, $SnO_2$, $Si_3N_4$....et leurs alliages. Ces couches diélectriques offrent diverses propriétés optiques et se distinguent aussi par leurs conditions de production industrielle.

Les structures les plus usuelles intègrent encore une couche particulière entre le métal et le diélectrique extérieur, couche qui a pour fonction de protéger le métal notamment pendant le dépôt de la couche de ce diélectrique.

En effet le plus souvent la formation de ce diélectrique s'effectue de façon dite « réactive ». Dans ce mode de production le diélectrique (oxyde ou nitrure) est constitué au moment même du dépôt par réaction de vapeur métallique émise par bombardement d'une cathode métallique, avec l'atmosphère à pression très réduite dans laquelle s'effectue ce dépôt, pour un oxyde, une atmosphère d'oxygène ou d'un mélange gazeux contenant de l'oxygène. Dans ces conditions, la couche métallique déposée se trouve en contact avec cette atmosphère et peut s'altérer en particulier à cause de la forte réactivité du plasma.

Pour une protection contre cette altération, il est usuel de disposer directement sur la couche métallique réfléchissant les infrarouges, une couche dite « barrière » ou encore « sacrificielle ». Il s'agit d'une couche de très faible épaisseur dont la fonction est de prévenir une altération possible de la couche métallique réfléchissant les rayons infrarouges notamment au cours des dépôts des couches supérieures.

La couche barrière est soigneusement sélectionnée tant pour sa nature que pour son épaisseur. Pour éviter qu'elle réduise sensiblement la transmission lumineuse, il est important de faire en sorte que la couche barrière d'une part soit aussi mince que possible, et d'autre part, qu'elle soit bien transparente à la fin du processus de production de l'empilage multicouche.

Les systèmes traditionnels présentent en conséquence la succession de couches suivante:

## Verre / diélectrique I / métal /barrière/ diélectrique II

Les couches métalliques, comme indiqué précédemment, sont celles qui réfléchissent sélectivement les rayons infrarouges et donc qui déterminent l'émissivité de l'ensemble. Si différents métaux sont nommés dans la littérature, pratiquement tous les produites existants utilisent des couches à base d'argent comme métal réfléchissant, argent qui peut comprendre des éléments "dopants". Il représente en effet le meilleur compromis en terme de réflexion des infrarouges et de transparence aux rayonnements dans les longueurs d'onde visibles et de neutralité de teinte en transmission et réflexion. Dans la suite, par mesure de simplification la couche métallique sera systématiquement présentée comme une couche d'argent.

Différents moyens ont été proposés pour faire en sorte que ces couches d'argent atteignent les meilleures performances. On peut signaler en particulier l'enseignement de la publication US 5 110 662, appartenant au demandeur, qui montre l'influence déterminante d'une couche de ZnOy disposée immédiatement sous la couche d'argent, et d'épaisseur bien définie. Il faut souligner que cette idée est reprise en variante dans un certain nombre de brevets ou demandes de brevet postérieurs, tel que WO 99/00528.

Diverses hypothèses ont été formulées pour expliquer le mécanisme qui fait que cette couche ZnOy améliore dans certaines conditions les propriétés d'émissivité et de conductivité. Parmi ces hypothèses certaines concernent par exemple « l'accrochage » de l'argent sur la couche diélectrique, d'autres le fait que la présence de ZnOy favorise la cristallisation de l'argent dans des systèmes conduisant à moins de joints de grains etc.

La conductivité, et par suite l'émissivité des couches d'argent déposées dans les conditions industrielles ont été sensiblement améliorées au cours du temps, sans atteindre les valeurs idéales de l'argent métallique. Le choix est bien entendu d'utiliser les couches présentant la meilleure conductivité et donc la meilleure émissivité possible. Faute de disposer de couches d'argent parfaites, une amélioration supplémentaire de l'émissivité ne semblait pouvoir être obtenue que par l'accroissement de l'épaisseur de la couche d'argent.

Il est parfaitement connu que l'émissivité décroît quand l'épaisseur de l'argent croît. Néanmoins, les conséquences de cet accroissement de l'épaisseur de l'argent ne sont pas toutes favorables. Si la transmission lumineuse, dans les limites des variations habituelles d'épaisseur de la couche d'argent, est relativement peu affectée, la difficulté principale réside dans l'altération significative des colorations induites notamment en réflexion. Les vitrages en question ont tendance à perdre en neutralité.

Pour cette raison notamment, les inventeurs se sont efforcés d'améliorer encore les systèmes de couches pour parvenir à des vitrages dont l'émissivité soit aussi réduite, tout en conservant le plus possible de transmission lumineuse et une neutralité de couleur acceptable.

Les inventeurs ont montré que cette amélioration pouvait venir du choix de la nature de la couche barrière et de son mode de production. Tel que défini à la revendication 1.

Selon l'invention la couche barrière utilisée est constituée d'une couche d'oxyde ou sous-oxyde de titane déposée à partir de cathodes d'oxyde de titane conducteur.

L'usage de couches barrières d'oxyde de titane est traditionnel. Cet oxyde présente l'avantage d'une grande stabilité, et, en raison de son indice de réfraction élevé, il minimise la perte de transmission lumineuse résultant de la présence de cette couche barrière. Il est déposé traditionnellement à partir de cibles métalliques et le plus souvent dans une atmosphère pratiquement dépourvue d'oxygène à l'exception des traces résiduelles après élimination de l'air ambiant.

La formation d'une couche aussi transparente que possible nécessite un oxyde pratiquement stoechiométrique. Partant d'une cible métallique, il est nécessaire d'oxyder le métal soit au moment du dépôt soit ultérieurement. L'oxydation provenant de la réaction du métal préalablement déposé par la réaction avec l'atmosphère oxydante régnant dans l'enceinte lors des dépôts ultérieurs des couches diélectriques supérieures n'est généralement pas suffisante, même si la couche barrière et très peu épaisse. Il en résulte en général un affaiblissement de la transmission lumineuse qui peut être de l'ordre de 1 à 2% et une dégradation de l'émissivité.

Par ailleurs, l'utilisation de cibles d'oxyde de titane conducteur a été proposée précédemment pour produire des couches diélectriques à propriétés optiques "dé-réfléchissantes" dans les empilages de couches. Cette application visait à se substituer aux techniques impliquant un dépôt dans des conditions essentiellement" réactives". En effet le dépôt le plus usuel est obtenu à partir de cibles de titane métallique dans une atmosphère oxydante. La difficulté de cette technique traditionnelle vient de la formation sur la cible d'un oxyde isolant conduisant à des vitesses de dépôt très lentes.

L'utilisation de cibles d'oxydes dites "céramiques", permet de s'affranchir en partie de cette contrainte, moyennant néanmoins quelques dispositions spécifiques. Il est nécessaire notamment d'utiliser un oxyde suffisamment conducteur. L'oxyde stoechiométrique n'est pratiquement pas conducteur et les propositions antérieures à ce sujet ont eu pour objectif principal de parvenir à faire des cathodes conductrices. C'est le cas en particulier de la publication EP 0 852 266 qui propose d'utiliser des oxydes sous-stoechiométriques, notamment du type $TiO_x$. L'oxyde sous forme pulvérulente est compacté et réduit pour lui conférer la conductivité requise. Cette publication envisage l'utilisation de ces cibles pour la formation de couches d'optique à fort indice.

De manière générale, le développement relativement récent de moyens comme les systèmes pulsés permettant d'accélérer substantiellement la vitesse de dépôt à partir de cibles métalliques, a fait que l'usage des cibles céramiques est resté relativement discret.

A l'expérience, les inventeurs ont montré que pour la production des couches barrières l'utilisation de cibles céramiques permet d'approcher au mieux les conditions favorables à la qualité de la couche d'argent. Le fait de pulvériser à partir d'un oxyde de titane conduit à une couche dont l'oxydation est mieux maîtrisée. La couche barrière obtenue peut être beaucoup plus proche de la stoechiométrie sans risquer de modifier la couche d'argent. De cette façon il est possible à la fois de réduire la perte de transmission lumineuse provenant de cette couche barrière, et d'améliorer la propriété bas-émissive de la couche d'argent pour une même quantité d'argent déposée. Inversement ce résultat permet, pour une même efficacité comme filtre des infrarouges, de réduire la quantité d'argent déposée et par suite d'améliorer encore la transmission lumineuse et surtout de mieux maîtriser les colorations en réflexion des vitrages obtenus.

La couche barrière selon l'invention est de préférence d'épaisseur aussi faible que possible pour limiter l'absorption lumineuse tout en protégeant convenablement la couche d'argent sous-jacente. En pratique cette couche n'est pas inférieure à 1nm.

Il est préférable de maintenir l'épaisseur inférieure à 6 et de façon encore plus préférée, inférieure à 5nm.

Il est possible de disposer une couche d'oxyde de titane dont l'épaisseur est supérieure à celle strictement nécessaire pour remplir le rôle de barrière. Dans ce cas la couche d'oxyde de titane joue simultanément le rôle d'un diélectrique intervenant dans les propriétés optiques de l'assemblage en tant que "dé-réfléchissant". Dans ce rôle la couche d'oxyde de titane est intéressante pour son indice de réfraction élevé qui permet de limiter l'épaisseur en maintenant un chemin optique déterminé. Dans cette hypothèse la couche peut atteindre ou même dépasser 10nm.

Pour faire en sorte d'approcher le plus possible la stoechiométrie lorsque la cathode conductrice est constituée d'un oxyde sous-stoechiométrique, la couche barrière d'oxyde de titane est déposée en atmosphère légèrement oxydante pour compenser notamment le déficit en oxygène du matériau de la cathode utilisé. L'atmosphère oxydante est constituée avantageusement d'un mélange de gaz inerte et d'un gaz oxydant.

Dans la maîtrise de la réaction interviennent différents facteurs. La proportion de chacun des constituants du mélange gazeux, leur nature, mais encore la pression totale, les flux gazeux la puissance électrique mise en jeu, la configuration de l'installation etc. Pour des pressions habituellement mises en oeuvre dans les installations industrielles qui sont de l'ordre de 2 à $10.10^{-6}$Torr et de préférence de 3 à $6.10^{-6}$Torr, le mélange comporte habituellement au plus 20% de gaz oxydant, le plus souvent au plus 10% et de préférence moins de 5% dans les conditions de puissance appliquées habituellement.

L'oxydant peut être constitué d'oxygène. Le dioxyde de carbone s'avère être aussi un oxydant qui permet une bonne maîtrise de la réaction. Le cas échéant le monoxyde de carbone peut également servir d'oxydant. Les oxydes d'azote sont aussi des gaz oxydants utilisables.

Le gaz inerte le plus usuel pour les installations de dépôt sous plasma est l'argon, mais d'autres gaz inertes peuvent également être utilisés seuls ou en mélange.

La quantité de gaz oxydant est fonction du mode de fonctionnement de la cathode. Il s'agit d'établir un compromis entre la vitesse de dépôt d'une part et la parfaite maîtrise de la réaction d'oxydation d'autre part. A très faible quantité d'oxydant la cathode fonctionne suivant le mode dit "métallique". Bien qu'il s'agisse d'une cathode d'oxyde de titane, par analogie la terminologie est celle qui est utilisée habituellement pour les modes "réactifs" avec les cathodes métalliques. La vitesse de dépôt peut être élevée, mais la réaction est moins commodément contrôlée. Si la teneur en oxydant est un peu plus élevée la réaction à la cathode peut amener une saturation qui limite la capacité de dépôt de façon inappropriée. Toujours par analogie, on qualifie alors ce mode "d'oxyde". Mais ce mode ne permet pas de garantir le maintien de la qualité de l'argent. Pour cette raison la quantité d'oxydant doit rester limitée.

Le choix des proportions du mélange permet d'établir un fonctionnement qui allie la stabilité et une vitesse de dépôt suffisante, sur une plage du rapport volume/puissance suffisamment large pour être commodément contrôlée dans les installations industrielles.

Les cathodes d'oxyde de titane conducteur sont avantageusement formées de composés sous-stoechiométriques comme enseigné par exemple dans le brevet cité EP 852 266. Le défaut d'oxygène dans ces oxydes est de préférence limité à ce qui est nécessaire pour que les cathodes soient suffisamment conductrices et permettent une vitesse de dépôt adéquate. Le degré de sous oxydation se situe de préférence de sorte que l'oxyde réponde à la formule TiOx, avec 1,5<x<1,95 et de préférence encore 1,7<x<1,9.

Les cathodes d'oxyde de titane peuvent aussi contenir des dopants notamment capables de contribuer à la conduction. Des dopants sont par exemple l'aluminium ou le silicium.

Les conditions de formation des couches barrières selon l'invention permettent de bien préserver les propriétés de la couche d'argent, et de minimiser l'absorption lumineuse liée à la barrière elle-même. L'absorption lumineuse par la couche barrière est dans tous les cas inférieure à 1%. Elle reste habituellement inférieure à 0,5%, et dans les conditions préférées est inférieure à 0,3%.

Lorsque l'on utilise simultanément la couche d'oxyde de titane comme couche barrière et comme couche "optique", et qu'en conséquence l'épaisseur est supérieure à 5nm ou même supérieure à 6nm, il est particulièrement souhaité de limiter l'absorption lumineuse de la couche qui croît avec cette épaisseur. Le dépôt peut s'effectuer dans des conditions différentes selon que celui-ci concerne la fraction de la couche immédiatement au contact de la couche d'argent ou qu'il s'agisse de la fraction la plus distante de cette couche d'argent. Cette dernière fraction est avantageusement parfaitement stoechiométrique pour être pratiquement dépourvue d'absorption lumineuse. Comme indiqué précédemment la partie au contact de l'argent doit d'abord garantir la couche d'argent de toute altération et de ce fait cette partie peut ne pas être parfaitement stoechiométrique.

La mise en oeuvre d'une couche dont la nature est adaptée en fonction de son épaisseur nécessite des aménagements particuliers, par exemple dans la circulation des flux gazeux et dans la disposition de la ou des cathodes d'oxyde de titane dans une ou plusieurs zones de l'installation, chaque zone correspondant usuellement à des conditions déterminées de dépôt notamment des conditions d'atmosphère. Selon les fabricants de ces installations, les zones comportent chacune une ou plusieurs cathodes.

En pratique par exemple lorsque la couche d'oxyde de titane n'a qu'un rôle barrière, le dépôt étant effectué dans des conditions très légèrement oxydantes, il est possible de réunir dans la même zone de l'installation la cathode d'argent et celle d'oxyde de titane. Dans le cas d'un dépôt plus épais d'oxyde de titane, pour accentuer le caractère oxydant des conditions de dépôt, au moins sur une partie de la couche, on peut effectuer le dépôt à partir de plusieurs cathodes successives d'oxyde de titane opérant dans des conditions, notamment d'atmosphère, différentes. Dans ce cas les cathodes d'oxyde de titane successives peuvent se situer dans des zones distinctes, une cathode dans la même zone que la cathode d'argent, la ou les autres cathodes dans une zone en aval, ou encore ces cathodes d'oxyde de titane toutes dans une ou plusieurs zone en aval de la zone comportant la cathode d'argent.

Que la couche soit seulement barrière ou qu'elle ait aussi un rôle optique, il est préféré de procéder au dépôt à partir d'une seule cathode. Lorsque la couche est relativement épaisse (de l'ordre d'une dizaine de nanomètres) et que l'on dépose cette couche à partir d'une seule cathode, il serait avantageux de pouvoir constituer une couche aussi transparente que possible pour limiter l'absorption, et donc d'oxyder complètement la couche. Mais ce faisant on prendrait le risque d'altérer la couche d'argent. En conséquence le choix d'une seule cathode conduit encore à déposer un oxyde qui n'est pas parfaitement stoechiométrique. Mais l'utilisation d'une couche à fort indice de réfraction, et la limitation d'épaisseur qu'entraîne cet indice sont plus que suffisants pour maintenir l'absorption globale à des niveaux très faibles.

Comme indiqué précédemment les vitrages bas-émissifs selon l'invention comportent en outre très avantageusement une couche d'oxyde de zinc sous la couche d'argent, et en contact direct avec cette dernière. Le système de couches présente donc la structure suivante:

## Verre/diélectrique I/ ZnOy/ Ag/TiOz/diélectrique II

Dans laquelle TiOz désigne la barrière éventuellement légèrement sous-stoechiométrique.

L'oxyde de zinc, ZnOy, est lui-même stoechiométrique ou légèrement sous-stoechiométrique. La couche de zinc dont le rôle, comme établi antérieurement, est d'améliorer les caractéristiques de la couche d'argent est avantageusement d'épaisseur relativement limitée. Elle est de préférence de 3 à 10nm, et de façon particulièrement préférée de 4 à 8nm. Une épaisseur plus importante n'apporte pas d'amélioration supplémentaire de la couche d'argent. Une épaisseur trop importante peut même nuire à ces propriétés en raison du changement éventuel de structure de la couche d'argent qui peut accompagner cette augmentation d'épaisseur. On a constaté en effet au-delà d'une certaine épaisseur une tendance à la croissance de l'oxyde de zinc sous forme "colonnaire" qui offre manifestement un support moins régulier pour la couche d'argent.

Les règlements relatifs aux vitrages isolants requièrent des performances en matière d'émissivité de plus en plus contraignante. A titre indicatif pour un vitrage constitué de deux feuilles de verre et d'un espace entre ces feuilles rempli d'un gaz isolant la demande actuelle est d'obtenir un coefficient U au plus égal à 1,1 W/m$^2$.K. Ces valeurs pour un gaz isolant comprenant au moins 85% d'argon nécessite une émissivité de l'ordre de 0,038 ou moins. La pratique est de prévoir un ensemble de couches sur l'une des deux feuilles de verre, cet ensemble de préférence ne comportant qu'une couche d'argent.

Comme simultanément les utilisateurs demandent une transmission lumineuse élevée et une neutralité de couleur en réflexion, les couches d'argent de même que les couches diélectriques sont enfermées dans des limites extrêmement précises.

Comme indiqué précédemment la couche d'argent est celle qui la première détermine l'émissivité. Pour atteindre les valeurs nécessaires cette couche même optimisée par l'usage d'une barrière selon l'invention doit présenter une certaine épaisseur. Selon les applications des vitrages la quantité d'argent par unité de surface utilisée se situe entre 80 et 150mg/m$^2$. Pour les applications proprement vitrage isolant la quantité d'argent se situe entre 100 et 140mg/m$^2$.

Dans les conditions de l'invention pour les quantités d'argent indiquées ci-dessus, les vitrages offrent avantageusement une émissivité qui ne dépasse pas 0,04, et de préférence qui ne dépasse pas 0,038. Dans les meilleures dispositions les vitrages selon l'invention ont une émissivité qui reste inférieure ou égale à 0,035.

De façon remarquable les valeurs d'émissivité indiquées ci-dessus sont obtenues pour des quantités d'argent qui restent inférieures à celles habituellement considérées comme nécessaires pour atteindre ces performances. Une manière d'exprimer cette aptitude consiste à mesurer le produit de la quantité d'argent par unité de surface et de la résistance exprimée en $\Omega/\square$. Plus ce produit est faible meilleur est l'ensemble considéré. A titre indicatif selon l'invention pour des quantités de 135mg/m$^2$ le produit est au plus égal à 440 et même au plus égal à 410 et peut être aussi faible que 370. En d'autres termes la couche d'argent mise en oeuvre dans les conditions de l'invention présente une conductivité et donc une émissivité particulièrement favorable.

Dans les chiffres indiqués ci-dessus il faut se référer à un appareil déterminé pour la mesure des résistances. L'expérience montre des différences sensibles de valeurs selon les appareils utilisés. L'appareil utilisé est un "Stratometer 500" de la société Nagy.

Ce résultat permet soit d'améliorer les performances pour une quantité d'argent donnée, soit de minimiser la quantité d'argent nécessaire pour atteindre une performance requise.

Les quantités d'argent par unité de surface concernent la couche d'argent supposée unique. Il est possible de remplacer cette couche par deux couches distinctes séparées par une ou plusieurs couches diélectriques. En pratique la division de la couche d'argent, en multipliant les interfaces, n'est pas la solution la plus performante pour l'obtention de la meilleure émissivité. Il peut être nécessaire, pour une même émissivité, d'accroître légèrement l'épaisseur totale. La solution consistant à utiliser deux couches d'argent au lieu d'une ouvre des possibilités différentes en ce qui concerne l'ajustement des systèmes interférentiels avec les couches diélectriques, pour améliorer la neutralité de couleur notamment en réflexion. Dans la mesure où la maîtrise de la neutralité de coloration peut être obtenue sans diviser la couche d'argent, cette solution est préférée car elle permet d'assurer une transmission lumineuse plus élevée et une meilleure sélectivité.

Les valeurs d'émissivité les plus satisfaisantes peuvent être atteintes sans dégrader la transmission lumineuse. Celle-ci pour une feuille de verre "float" clair de 4mm d'épaisseur dont la transmission propre est de 90%, s'établit avantageusement avec un système de couches selon l'invention à des valeurs qui ne sont pas inférieures à 83% et avantageusement pas inférieures à 84% et qui peuvent atteindre et dépasser 86%.

Les valeurs indicatives de transmission lumineuse données ci-dessus sont celles de systèmes déposés sur des verres clairs ordinaires. Des valeurs plus élevées sont accessibles lorsque les dépôts sont réalisés sur de verres dits "extra-clairs". Il est alors possible d'augmenter la transmission de 1 à 2% et pour les verres les plus clairs de 2,5%.

Pour atteindre ces valeurs de transmission il est nécessaire de limiter la réflexion dans le visible par une sélection appropriée des couches "dé-réfléchissantes" situées au-dessus et au-dessous de la couche d'argent en dehors des couches barrière et de ZnOy déjà détaillées. Simultanément le choix de ces couches, nature et épaisseur, doit permettre de maintenir les vitrages dans des conditions de neutralité de couleurs exigée par les utilisateurs, notamment la neutralité en réflexion. Dans les coordonnées colorimétriques CIELAB ceci correspond aux valeurs a* et b* voisines de zéro. Des valeurs négatives, en particulier pour b*, sont aussi acceptables. Elles confèrent au vitrage soit une nuance bleue pour les valeurs négatives de b*, soit une nuance verte pour les valeurs négatives de a*. A l'inverse on s'efforce d'éviter des valeurs positives de a*, qui conduiraient à des nuances pourpres et brunâtres.

La neutralité des vitrages dépend du choix des combinaisons de couches. Les couches constituant les ensembles en question interviennent pour former un système interférentiel qui permet d'éliminer la majeure partie des longueurs d'onde non-désirées. L'élimination de ces couleurs suit un mécanisme bien connu dans ce domaine. La difficulté est de combiner tout à la fois les exigences colorimétriques à celles liées aux conditions « de base » : transmission, lumineuse élevée et émissivité très faible.

Les systèmes interférentiels qui permettent de « neutraliser » la couleur en réflexion conduisent à disposer au moins une couche d'indice de réfraction relativement élevé sous la couche d'argent, en dehors de la couche d'oxyde de zinc dont il est question ci-dessus, et des couches d'indice de réfraction plus faible au-dessus de la couche barrière située sur la couche d'argent.

Le choix des couches diélectriques, non seulement doit correspondre aux conditions d'indice permettant de réduire le plus possible la réflexion dans le visible, sans altérer la neutralité, que ce soit en réflexion ou en transmission, mais encore ce choix des couches doit conduire à une absorption aussi faible que possible. Ces couches doivent encore être parfaitement compatibles avec les couches avec lesquelles elles sont en contact, et surtout être relativement faciles et économiques à produire industriellement dans les installations traditionnelles.

Le filtre optique constitué par la couche d'argent et l'ensemble des couches diélectriques requiert un certain chemin optique, autrement dit une certaine valeur de l'épaisseur géométrique (e) de chaque couche multipliée par l'indice (n) de cette couche (exn). Pour les épaisseurs d'argent considérées selon l'invention, les chemins optiques de l'ensemble des couches situées respectivement sous, et au-dessus de l'argent, sont de 50 à 90 nm en dessous, et de 70 à 110 nm au-dessus. De préférence ces chemins optiques qui permettent d'atteindre à la neutralité tant en réflexion qu'en transmission, sont de 55 à 80 nm sous l'argent, et de 75 à 100 nm au-dessus de l'argent.

Les diélectriques situés sous l'argent en dehors de la couche de ZnOy sont avantageusement des couches d'oxyde ou de nitrures ou d'oxynitrures de titane, de zirconium, des couches de bismuth ou d'alliages de titane et d'aluminium ou de silicium. L'oxyde de titane est avantageux en raison de son indice de réfraction élevé et de sa grande transparence.

L'oxyde de titane peut être déposé à partir de cathodes d'oxyde conducteur, comme exposé précédemment à propos de la couche barrière. Les couches d'oxyde de titane obtenues de cette manière, même si elles présentent un déficit en oxygène, entraînant une certaine absorption lumineuse, restent performantes en raison de leur épaisseur plus réduite qui compense cette légère absorption.

L'oxyde de titane obtenu présente un indice de réfraction pour une longueur d'onde de 550 nm, qui n'est pas habituellement supérieur à 2,6, et se situe le plus souvent entre 2,30 et 2,5 selon les conditions de dépôt, les indices les plus élevés étant obtenus pour les vitesses de dépôt également les plus élevées.

Les indices de réfraction des autres couches sont: pour l'oxyde de zinc, même contenant une faible proportion d'aluminium, de l'ordre de 1,9 à 2; celui de l'oxyde de zirconium est voisin de 2,1 à 2,2. Pour les oxydes mixtes à base de titane et d'un autre métal, l'indice dépend de la proportion de ce dernier contenu dans l'alliage. Les alliages préférés présentent un indice compris entre 2,1 et 2,3 correspondant, pour un alliage à base de titane et d'aluminium par exemple, à des pourcentages d'aluminium qui peuvent aller jusqu'à 50% d'aluminium, et qui se situent de préférence entre 10 et 30% en poids dans la cible, proportion qui reste à peu près la même dans la couche déposée.

Le système interférentiel peut bien évidemment comprendre plusieurs couches distinctes sous l'argent. Un système préféré est constitué de:

$$\text{Verre/TiOw/ZnOy/Ag/TiOz/......}$$

dans lequel TiOw désigne un oxyde ou sous-oxyde de titane qui n'est pas nécessairement identique à celui de la couche barrière noté comme précédemment TiOz.

Pour constituer un filtre interférentiel satisfaisant, les diélectriques situés au-dessus de la couche barrière forment de façon traditionnelle un ensemble qui, en plus des propriété conduisant à l'établissement du filtre interférentiel, offre une protection convenable de la couche d'argent tant du point de vue chimique que mécanique.

Pour leur commodité de dépôt associée à une bonne transmission lumineuse, des couches diélectriques préférées situées au-dessus de l'argent sont à base d'oxydes de zinc, d'étain, d'indium, de mélanges de ces oxydes ou de nitrures ou encore d'oxynitrures tels que ceux de silicium ou d'aluminium ainsi que leurs mélanges.

Il est usuel de combiner le cas échéant plusieurs couches de natures différentes pour tenir compte des spécificités de chacune. Ainsi l'oxyde de zinc largement utilisé en raison de sa formation relativement aisée, présente l'inconvénient d'offrir une faible résistance chimique du fait de la structure « colonnaire » qu'il tend à développer lorsque son épaisseur est suffisante. Cette croissance colonnaire facilite la pénétration de l'humidité et des agents chimiques au sein de la couche en direction de la couche d'argent.

Pour cette raison, si l'usage d'une couche de zinc est usuel, celle-ci est généralement associée à une couche sensiblement plus « compacte » faisant obstacle aux agents chimiques. Une couche à base d'oxyde d'étain ou d'oxyde d'indium, éventuellement dopé ou encore une couche de nitrure de silicium est avantageusement introduite dans le système de couches situées au-dessus de l'argent.

Une combinaison particulièrement avantageuse est constituée par l'ensemble suivant situé au-dessus de l'argent :

$$\text{Verre/.../Ag/TiOz/ZnO/SnO}_2\text{...}$$

Une autre combinaison avantageuse selon l'invention comprend la séquence suivante au-dessus de la couche d'argent:

$$\text{Verre/.../Ag/TiOz/Si}_3\text{N}_4\text{......}$$

Le système de couches des vitrages selon l'invention peut encore recevoir une couche superficielle choisie de manière à offrir particulièrement une grande résistance mécanique. Des couches d'oxyde de titane ont été proposées antérieurement dans ce but. Elles peuvent être utilisées dans le cadre des vitrages selon l'invention. Néanmoins l'indice élevé des couches d'oxyde de titane fait qu'il est préférable de leur substituer d'autres couches, en particulier des couches d'oxyde de silicium, qui en plus de leur dureté, ont un indice très faible qui contribue à l'aménagement du système interférentiel approprié.

La couche superficielle dure ayant essentiellement un rôle de protection mécanique, son épaisseur est limitée à ce qui s'avère efficace dans ce domaine. L'épaisseur ne sera pas en règle générale supérieure à 15 nm. Si l'oxyde de silicium est choisi, 4a difficulté de production de ce type de couche conduit de préférence à ne pas dépasser une épaisseur de 12 nm.

Pour répondre aux exigences des utilisateurs, il convient non seulement d'améliorer l'émissivité en maintenant la transmission lumineuse, il faut encore que les vitrages selon l'invention restent neutres en particulier en réflexion.

Une feuille de verre selon l'invention comporte un ensemble de couches tel qu'indiqué précédemment, et dont les épaisseurs respectives d'argent et des diélectriques sont choisies de telle sorte que les valeurs des coordonnés colorimétriques CIELab sous illuminant D65 s'établissent en réflexion à :

$$-4 < a^* < 3 \quad et \quad -17 < b^* < -5$$

et de façon préférée à :

$$-3 < a^* < 2 \quad et \quad -13 < b^* < -8.$$

En transmission le bon rendement des couleurs est capital. Pour cette raison une neutralité plus stricte est nécessaire. De préférence les épaisseurs d'argent et des diélectriques, sont choisies de telle sorte que les coordonnées colorimétriques dans le système CIELab en transmission s'établissent à :

$$-4 < a^* < 0 \quad et \quad b^* < 4$$

et de préférence :

$$-3 < a^* < 0 \quad et \quad b^* < 3.$$

Le point important pour la lumière transmise est de ne pas présenter une coloration jaune prononcée, autrement dit que b* ne soit pas trop positif.

L'invention concerne aussi les vitrages doubles constitués à l'aide de deux feuilles de verre dont l'une porte l'ensemble des couches indiquées précédemment. Dans ces vitrages doubles les couches sont disposées avantageusement en position tournée vers l'espace entre les deux feuilles, et plus particulièrement en position 3 selon la désignation traditionnelle, c'est à dire sur la feuille de verre en contact avec l'atmosphère intérieure et sur la face de celle-ci à l'intérieur du double vitrage. Les vitrages doubles selon l'invention répondent avantageusement aux conditions de neutralité obtenues comme précédemment en ajustant les épaisseurs des couches dans les limites indiquées à propos des caractéristiques d'émissivité et de transmission lumineuse, de telle façon que les coordonnés colorimétriques en réflexion extérieure dans le système CIELab s'établissent à :

$$-3 < a^* < 1 \quad et \quad -8 < b^* < 0$$

et de préférence :

$$-2 < a^* < 0 \quad et \quad -7 < b^* < -2$$

Par le choix de la nature et de l'épaisseur des couches diélectriques situées sous et au-dessus de l'argent, les vitrages doubles selon l'invention présentent aussi avantageusement pour deux feuilles de verre de float clair de 4mm d'épaisseur, dont la transmission sans couche s'établit à 82%, une transmission lumineuse qui n'est pas inférieure à 73%, et de préférence pas inférieure à 75%. La transmission pour ces vitrages doubles peut avantageusement être supérieure à 76% et peut s'élever à plus de 78% pour les quantités d'argent les moins importantes dans les fourchettes indiquées précédemment. Comme précédemment indiqué, ces valeurs peuvent être accrues par l'utilisation de verres "extra-clairs".

Pour illustrer les avantages procurés par la mis en oeuvre de l'invention des systèmes de couches sont déposés sur des feuilles de verre clair de 4mm d'épaisseur dont la transmission propre est de 90%.

Sur ces verres on dépose une couche de d'oxyde de titane TiOw à partir de cathodes céramiques. La couche d'oxyde de titane est de 20nm. On dépose ensuite une couche de ZnOy de 4nm d'épaisseur par dépôt réactif à partir d'une cathode de zinc. Sur la couche d'oxyde de zinc on applique une couche d'argent déposée en atmosphère argon.

Sur cette base commune on procède au dépôt d'une couche barrière selon les différentes voies indiquées ci-après. L'ensemble est recouvert d'une couche de ZnO suivie d'une couche de $SnO_2$, les deux couches totalisant une épaisseur de 47nm.

La séquence complète est donc:

Verre/TiOw/ZnOy/Ag/barrière/ZnO/$SnO_2$

Le dépôt de la couche barrière est d'abord réalisé à partir d'une cible de titane métallique en atmosphère argon. La couche barrière est de 2,5nm. Dans ce cas la couche d'argent est de 135mg/m$^2$.

Les propriétés de ce vitrage sous forme double vitrage isolant le système de couche étant appliqué en position 3, conduit aux propriétés suivantes:

| | |
|---|---|
| TL | 74,7 |
| ε | 0,038 |
| qualité | 445 |

$$a^* \quad -0,1 \qquad b^* \quad -6,9$$

Sur le même assemblage on effectue le dépôt de la couche barrière selon l'invention à partir d'une cathode céramique de TiOx (x est 1,82), dans une atmosphère argon/oxygène à raison de 1% d'oxygène. La couche barrière a une épaisseur de 3,5nm. La couche d'argent est de 131mg/m$^2$. Les propriétés sont alors de :

| | |
|---|---|
| TL | 76,2 |
| ε | 0,037 |
| qualité | 420 |

$$a^* \quad -0,1 \qquad b^* \quad -5,7$$

On constate dans les conditions de l'invention une diminution de l'émissivité et une augmentation de la transmission, bien que la quantité d'argent soit inférieure à celle de l'exemple de référence précédent, et que la couche barrière soit un peu plus épaisse.

Toujours sur le même assemblage la barrière est déposée à partir de la cathode TiOx précédente, dans une atmosphère argon/dioxyde de carbone à raison de 2% de dioxyde de carbone. La couche barrière a une épaisseur de 3nm. La couche d'argent est de 126mg/m$^2$. Les propriétés sont:

| | |
|---|---|
| TL | 76,9 |
| ε | 0,034 |
| qualité | 375 |

$$a^* \quad -0,3 \qquad b^* \quad -6,$$

L'émissivité et la transmission lumineuse sont encore meilleures que précédemment et ceci pour une quantité d'argent moindre.

## Revendications

**1.** Vitrage à faible émissivité comprenant, sur une feuille de verre, un ensemble de couches minces formées par dépôt sous vide assisté par magnétron, ensemble comprenant au moins une couche métallique réfléchissant les rayons infrarouges, disposée entre une ou plusieurs couches diélectriques situées entre la couche métallique et la feuille de verre d'une part et sur la couche métallique d'autre part, la couche métallique étant revêtue d'une couche barrière protectrice, constituée d'une couche d'oxyde ou sous-oxyde de titane, déposée dans une atmosphère à pression réduite faiblement oxydante constituée d'un mélange de gaz inerte et de gaz oxydant à partir d'une cathode d'oxyde de titane conducteur, l'atmosphère dans l'enceinte de dépôt présentant une teneur en gaz oxydant qui n'est pas supérieure à 20%, et la pression dans l'enceinte de dépôt étant maintenue de 2 à 10. $10^{-6}$ Torr.

2.  Vitrage selon la revendication 1 dans lequel la cathode d'oxyde de titane conducteur est constituée d'un oxyde TiOx avec $1,5<x<1,95$ et de préférence $1,7<x<1,9$.

3.  Vitrage selon l'une des revendications précédentes dans lequel l'absorption lumineuse propre à la barrière est inférieure à 1% et de préférence inférieure à 0,5%.

4.  Vitrage selon la revendication 4, dans lequel la couche barrière est déposée en atmosphère composée d'un mélange d'un gaz inerte et de dioxyde de carbone.

5.  Vitrage selon l'une des revendications précédentes dans lequel la couche barrière présente une épaisseur d'au moins 1nm.

6.  Vitrage selon l'une des revendications précédentes dans lequel la couche barrière présente une épaisseur qui n'est pas supérieure à 6 et de préférence pas supérieure à 5nm.

7.  Vitrage selon l'une des revendications précédentes dans lequel la couche métallique est une couche d'argent uniformément appliquée à raison de 80 à 150mg/m$^2$.

8.  Vitrage selon la revendication 7 dans lequel la couche barrière est déposée sur une couche d'argent métallique uniformément appliquée à raison de 100 à 140mg/m$^2$.

9.  Vitrage selon l'une des revendications précédentes dans lequel la couche métallique est déposée sur une couche d'oxyde ou sous oxyde de zinc dont l'épaisseur est comprise entre 3 et 10nm.

10. Vitrage selon l'une des revendications précédentes dans lequel l'émissivité est au plus égale à 0,04 et de préférence au plus égale à 0,038.

11. Vitrage selon l'une des revendications précédentes dans lequel la couche métallique est une couche d'argent au plus de 135mg/m$^2$, le produit de cette valeur par celle de la résistance exprimée en ohm carré, est au plus égale à 420 et de préférence au plus égale 410.

12. Vitrage selon l'une des revendications précédentes dans lequel pour une feuille de verre "float" clair de 4 mm d'épaisseur, de transmission lumineuse propre égale à 90%, la transmission de la feuille revêtue de ces couches présente une transmission lumineuse au moins égale à 83%, et de préférence supérieure à 84%.

13. Vitrage selon l'une des revendications 7 à 12 dans lequel la nature et les épaisseurs des couches des diélectriques sont choisies de telle sorte que le chemin optique de l'ensemble des couches situées sous l'argent soit de 50 à 90 nm, et celui des couches situées au-dessus de l'argent soit de 70 à 110 nm.

14. Vitrage selon la revendication 13 dans lequel le chemin optique de l'ensemble des couches situées sous l'argent est de 55 à 80 nm, et celui des couches situées au-dessus de l'argent de 75 à 100 nm.

15. Vitrage selon la revendication 14 dans lequel la nature et les épaisseurs des couches des diélectriques sont choisies de telle sorte que la couleur en réflexion exprimée dans les coordonnées CIELab soient telles que : $-4<a*\leq3$ et $-17<b*\leq-5$.

16. Vitrage selon la revendication 15 dans lequel la nature et les épaisseurs des couches des diélectriques sont choisies de telle sorte que la couleur en réflexion soit : $-3<a*\leq2$ et $-13<b*\leq-8$.

17. Vitrage comportant deux feuilles de verre, l'une d'entre elles étant constituée selon l'une des revendications précédentes, l'espace ménagé entre les deux feuilles de verre emprisonnant une atmosphère constituée d'au moins 85% d'argon.

**Claims**

1. Low-emissivity glazing comprising an assembly of thin layers formed by magnetron sputtering on a glass sheet, said assembly comprising at least one metal layer that reflects infrared radiation arranged between one or more dielectric layers located between the metal layer and the glass sheet on the one hand and on the metal layer on the other hand, wherein the metal layer is covered with a protective barrier layer formed from a layer of titanium oxide or suboxide deposited in a lightly oxidising atmosphere at reduced pressure formed from a mixture of inert gas and oxidising gas from a cathode of conductive titanium oxide, wherein the atmosphere in the deposition chamber has a content of oxidising gas that is not higher than 20% and the pressure in the deposition chamber is maintained at 2 to $10.10^{-6}$ Torr.

2. Glazing according to claim 1, in which the cathode of conductive titanium oxide is formed from a TiOx oxide with $1.5 < x < 1.95$ and preferably $1.7 < x < 1.9$.

3. Glazing according to one of the preceding claims, in which the light absorption relating to the barrier is lower than 1% and preferably lower than 0.5%.

4. Glazing according to claim 4, in which the barrier layer is deposited in an atmosphere composed of a mixture of an inert gas and carbon dioxide.

5. Glazing according to one of the preceding claims, in which the barrier layer has a thickness of at least 1 nm.

6. Glazing according to one of the preceding claims, in which the barrier layer has a thickness that is not greater than 6 nm and preferably not greater than 5 nm.

7. Glazing according to one of the preceding claims, in which the metal layer is a layer of silver uniformly applied at a rate of 80 to 150 mg/m$^2$.

8. Glazing according to claim 7, in which the barrier layer is deposited onto a layer of metallic silver uniformly applied at a rate of 100 to 140 mg/m$^2$.

9. Glazing according to one of the preceding claims, in which the metal layer is deposited onto a layer of zinc oxide or suboxide having a thickness in the range of between 3 nm and 10 nm.

10. Glazing according to one of the preceding claims, in which the emissivity is at most equal to 0.04 and preferably at most equal to 0.038.

11. Glazing according to one of the preceding claims, in which the metal layer is a silver layer of at most 135 mg/m$^2$, the product of this value by that of the resistivity expressed in ohms per square is at most equal to 420 and preferably at most equal to 410.

12. Glazing according to one of the preceding claims, in which in the case of a sheet of clear "float" glass 4 mm thick having a light transmission equal to 90%, the transmission of the sheet covered with these layers has a light transmission at least equal to 83%, preferably higher than 84%.

13. Glazing according to one of claims 7 to 12, in which the nature and thicknesses of the layers of dielectrics are selected such that the optical path of the assembly of layers located under the silver is 50 to 90 nm and that of the layers located above the silver is 70 to 110 nm.

14. Glazing according to claim 13, in which the optical path of the assembly of layers located under the silver is 55 to 80 nm and that of the layers located above the silver is 75 to 100 nm.

15. Glazing according to claim 14, in which the nature and thicknesses of the layers of dielectrics are selected so that the colour in reflection expressed in CIELab coordinates is such that: $-4 < a^* \leq 3$ and $-17 < b^* \leq -5$.

16. Glazing according to claim 15, in which the nature and thicknesses of the layers of dielectrics are selected so that the colour in reflection is: -3 < a* ≤ 2 and -13 < b* ≤ - 8.

17. Glazing comprising two glass sheets, one of which is configured according to one of the preceding claims, wherein the space arranged between the two glass sheets encloses an atmosphere formed from at least 85% argon.

**Patentansprüche**

1. Verglasung mit geringer Emissivität, die auf einer Glasfolie eine Einheit von dünnen Schichten enthält, die durch eine Magnetron-unterstützte Vakuumabscheidung geformt werden, wobei die Einheit mindestens eine die Infrarotstrahlen reflektierende Metallschicht enthält, die zwischen einer oder mehreren dielektrischen Schichten angeordnet ist, die sich zwischen der Metallschicht und der Glasfolie einerseits und auf der Metallschicht andererseits befinden, wobei die Metallschicht mit einer schützenden Sperrschicht bedeckt ist, die aus einer Titanoxid- oder Titansuboxidschicht aufgebaut ist, die in einer aus einer Mischung von Inertgas und oxidierendem Gas bestehenden, schwach oxidierenden Atmosphäre mit verringertem Druck ausgehend von einer Kathode aus leitendem Titanoxid abgeschieden wird, wobei die Atmosphäre im Abscheidungsraum einen Gehalt an oxidierendem Gas hat, der nicht höher ist als 20%, und der Druck im Abscheidungsraum zwischen 2 und $10.10^{-6}$ Torr gehalten wird.

2. Verglasung nach Anspruch 1, bei der die Kathode aus leitendem Titanoxid aus einem Oxid TiOx mit 1,5<x<1,95 und vorzugsweise 1,7<x<1,9 aufgebaut ist.

3. Verglasung nach einem der vorhergehenden Ansprüche, bei der die der Sperre eigene Lichtabsorption geringer als 1 % und vorzugsweise geringer als 0,5% ist.

4. Verglasung nach Anspruch 1, bei der die Sperrschicht in einer Atmosphäre aus einer Mischung aus einem Inertgas und Kohlendioxid abgeschieden wird.

5. Verglasung nach einem der vorhergehenden Ansprüche, bei der die Sperrschicht eine Dicke von mindestens 1 nm hat.

6. Verglasung nach einem der vorhergehenden Ansprüche, bei der die Sperrschicht eine Dicke hat, die nicht größer als 6 und vorzugsweise nicht größer als 5 nm ist.

7. Verglasung nach einem der vorhergehenden Ansprüche, bei der die Metallschicht eine Silberschicht ist, die mit 80 bis 150 mg/m$^2$ gleichmäßig aufgebracht wird.

8. Verglasung nach Anspruch 7, bei der die Sperrschicht auf eine Silbermetallschicht abgeschieden wird, die mit 100 bis 140 mg/m$^2$ gleichmäßig aufgebracht wird.

9. Verglasung nach einem der vorhergehenden Ansprüche, bei der die Metallschicht auf eine Zinnoxidschicht oder Zinnsuboxidschicht abgeschieden wird, deren Dicke zwischen 3 und 10 nm liegt.

10. Verglasung nach einem der vorhergehenden Ansprüche, bei der die Emissivität höchstens gleich 0,04 und vorzugsweise höchstens gleich 0,038 ist.

11. Verglasung nach einem der vorhergehenden Ansprüche, bei der die Metallschicht eine Silberschicht von höchstens 135 mg/m$^2$ ist, wobei das Produkt dieses Werts mit demjenigen des Widerstands, ausgedrückt in Quadratohm, höchstens gleich 420 und vorzugsweise höchstens gleich 410 ist.

12. Verglasung nach einem der vorhergehenden Ansprüche, bei der für eine klare "Float"-Glasfolie mit 4 mm Dicke, mit einer Eigenlichttransmission von 90%, die Transmission der mit diesen Schichten bedeckten Folie eine Lichttransmission mindestens gleich 83% und vorzugsweise von mehr als 84% hat.

13. Verglasung nach einem der Ansprüche 7 bis 12, bei der die Beschaffenheit und die Dicken der Schichten der Dielektrika so gewählt werden, dass der Lichtweg der Einheit der sich unter dem Silber befindenden Schichten 50 bis 90 nm, und derjenige der sich über dem Silber befindenden Schichten 70 bis 110 nm beträgt.

**14.** Verglasung nach Anspruch 13, bei der der Lichtweg der Einheit der sich unter dem Silber befindenden Schichten zwischen 55 und 80 nm, und derjenige der sich über dem Silber befindenden 75 bis 100 nm beträgt.

**15.** Verglasung nach Anspruch 14, bei der die Beschaffenheit und die Dicken der Schichten der Dielektrika so gewählt werden, dass die Reflexionsfarbe ausgedrückt in den CIELab-Koordinaten so ist, dass gilt: $-4 < a^* \leq 3$ und $-17 < b^* \leq -5$.

**16.** Verglasung nach Anspruch 15, bei der die Beschaffenheit und die Dicken der Schichten der Dielektrika so gewählt werden, dass die Reflexionsfarbe ist: $-3 < a^* \leq 2$ und $-13 < b^* \leq -8$.

**17.** Verglasung, die zwei Glasfolien aufweist, von denen eine nach einem der vorhergehenden Ansprüche hergestellt ist, wobei der zwischen den zwei Glasfolien freigelassene Raum eine Atmosphäre umschließt, die aus mindestens 85% Argon aufgebaut ist.

**RÉFÉRENCES CITÉES DANS LA DESCRIPTION**

**Documents brevets cités dans la description**

- US 5110662 A
- WO 9900528 A
- EP 0852266 A
- EP 852266 A